# EUROPEAN PATENT SPECIFICATION

(11) **EP 2 406 060 B1**
(45) Date of publication and mention of the grant of the patent: **29.06.2016**
(21) Application number: 10750278.3
(22) Date of filing: 12.03.2010
(51) Int. Cl.: B29C 65/66, F16L 47/00, B29C 63/42, B29C 65/14

(54) **APPARATUS CONTAINING MULTIPLE SEQUENTIALLY USED INFRARED HEATING ZONES FOR TUBULAR ARTICLES**
VORRICHTUNG MIT MEHREREN SEQUENZIELL VERWENDETEN IR-HEIZZONEN FÜR ROHRFÖRMIGE ARTIKEL
APPAREIL CONTENANT DE MULTIPLES ZONES DE CHAUFFAGE PAR INFRAROUGE À USAGE SÉQUENTIEL POUR OBJETS TUBULAIRES

(30) Priority: 13.03.2009 CA 2658494
(43) Date of publication of application: 18.01.2012
(73) Proprietor: ShawCor Ltd., Toronto, Ontario M9W 1M7 (CA)
(72) Inventor: TAILOR, Dilip, Kumar, Mississauga Ontario L5R 4B1 (CA); BRANDON, Mark, Phillip, Toronto Ontario M1C 3M9 (CA); TACOMA, Emerson, John, Georgetown Ontario L7G 6C1 (CA)
(74) Representative: Vossius & Partner Patentanwälte Rechtsanwälte mbB
(86) International application number: PCT/CA2010/000334
(87) International publication number: WO 2010/102392

(56) References cited:
- EP-A1- 0 417 375
- EP-A1- 0 952 084
- WO-A1-92/02355
- GB-A- 2 262 146
- US-A- 3 353 005
- US-A- 3 567 907
- US-A- 4 460 820
- US-A- 4 628 989
- US-A- 4 749 843
- US-A- 5 060 289

## Description

### Field of the Invention

The invention relates to apparatus for heating an elongate tubular article, for example, heating a heat shrinkable sleeve applied around a welded pipe joint during pipeline construction, or for pre-heating a welded pipe joint before treating or coating.

### Background of the invention

Usually, pipe for pipeline construction is coated with a mainline polymer coating leaving the ends of the pipe bare to allow the exposed ends to be welded together at a pipe joint. There are several different ways used in the art to coat pipe joints. One such way is the use of a heat shrinkable sleeve applied around the welded pipe joint. The sleeve is fitted to the pipe joint, then heat shrunk down onto the joint. Alternatively, a film or tape wrapping can be used. This can be, for example, a polypropylene film, which is wrapped around the pipe joint. The film or tape wrapping requires use of heat and tension to fuse the wrapping to itself as it is applied to the pipe joint. Typically, the film or tape wrapping is also applied over the ends of the pipeline coating, to form a complete coating of the exposed pipe. Such film or tape wrapping typically requires pre-heating of the exposed pipe to facilitate or enable fusion of the wrapping to the pipe. A further alternative way of coating the welded pipe joint is an injection moulding method, whereby the exposed pipe joint is encased with a mould, and a polymer, such as polypropylene or polyurethane, is pressure injected into the mould. The polymer is allowed to cool, and the mould is removed, leaving a pipe joint that is coated with polymer. As can be appreciated, such a method also benefits from the pre-heating of the exposed pipe, so that the injected polymer is not cooled too quickly upon contact with the pipe and a good adhesion to the substrate is affected. These injection moulding and film or tape wrapping methods have an advantage over the use of heat shrinkable sleeves in situations where the mainline coating is extremely thick, and the joint cavity needs to be filled.

In the case of heat shrinkable sleeves applied around a welded pipe joint during pipeline construction, typically, such sleeves are heated and shrunk down onto the joint or other article using a hand held flame torch (see, for example, US patent 4,472,468, entitled "Heat Shrinkable Covering and Method for Applying Same", issued September 18, 1984, which is incorporated herein by reference). In some cases, this manual operation produces an imperfect installation because of air trapped underneath the shrunk down sleeve. This can arise when the ends of the sleeve are shrunk down before the middle portion of the sleeve. Artful application of the torch is critical. If the torch is tilted outwardly the end zones of the sleeve may shrink first leading to air entrapment. Windy conditions may spread the flame and shrink the end zones of the sleeve prematurely. Further, unless the torch is moved carefully, the torch flame may burn the sleeve and cause it to split. Where a large area needs to be heated, it becomes difficult or impossible to maintain the heat while the sleeve is being shrunk; this leads to wrinkling of the sleeve, imperfect installation due to trapped air, tearing, or scorching of the heat shrink material. Sometimes, it also results in improper or incomplete adherence of the heat shrink material around the welded pipe joint.

Before the field joints coatings are applied over the joint, the joint has to prepared in prescribed manner required for the coating type. Typically, for heat shrink sleeves, tapes and wrap systems, and injection molding, the steel is usually grit blasted, and in rare cases, power wire brushed to obtain white metal or near white metal finish. The mainline coating is usually prepared in order to clean it, and often impart roughness by abrading or light grit blasting. The joint usually requires preheating to remove moisture, but more importantly to achieve certain temperature consistent with coating type to obtain adhesion or fusion of the joint coating to the steel and to the mainline coating. For example, for polypropylene type shrink sleeves, where the adhesive may have melting point of around 155°C, the preheat of the steel is often 180°C. The preheating is often done by using induction heating, which heats the steel only, and indirectly the mainline polymeric coating. Since the exposed steel is directly heated, it can be taken to the desired temperature readily, however, the mainline coating gets heated via the heat conducted by the heated steel underneath. Therefore there is time lag for the coating surface to heat up, and there is often 40 - 100°C temperature difference on the steel and coating surface temperature, depending on the coating thickness. For example, on a 610 mm diameter pipe with a wall thickness of 25mm, when the joints steel temperature reaches 180°C, a polypropylene coating of a 5mm thickness may only reach 100°C - 120°C. Therefore when subsequently applying a heat shrink sleeve over a joint with such substrate heat profile, the sleeve requires more heat to be applied near the ends overlapping over the mainline coating in order for the sleeve to adhere to the exposed steel and the mainline coating to form a sound protective seal.

The differences in materials in the exposed steel, and the mainline coating result in different heat requirements during the preheating. In some cases, for example, excess heat at the pipe joint may overheat the mainline coating and damage it. During preheating, more intense heat is generally required on the exposed steel, and less intense heat being required the coated pipe, due to the properties of the material used in the mainline coating. For example, where a pipe has a thick mainline coating, made of polymeric material, the exposed steel will have different specific heat, heat resistance, retention and conductivity characteristics than the mainline coating. Thus, the exposed steel may require a more intense heat (which would damage the mainline coating), but may require it for a shorter amount of time, with the mainline coating requiring a lower heat, for a longer period of time, in order for the heat to absorb into the coating thickness. In addition, where heat is applied using a hand held flame torch, the operator of the torch must bear in mind the differences in thicknesses of the different zones to be coated, and radially adjust the torch position accordingly. For example, the thickness of the mainline coating may be substantial, and the operator may need to move the torch a substantial distance in order to keep the same distance between the torch and the area to be heated.

The sizes and configurations of torches and heating implements vary greatly in the field, as do the sizes and configurations of the pipes to be treated. Sometimes, large powerful torches are used. These tend to flare out greatly and do not allow focused heating of the shrink sleeve, thereby causing air entrapment due to prematurely shrunk sleeve ends. Sometimes four torches are used to shrink a sleeve to get fast production rates, with two operators on one side of the pipe and two on the other. This practice makes it very difficult to selectively heat the middle portion of the sleeve before the ends, and makes it near impossible to apply even, consistent heat throughout the area to be heated, to accurately control the amount of heat applied to different areas to be shrunk, or to accurately control the order in which the various areas are to be heated. Often, in order to obtain proper adhesion of the sleeve, it is required to maintain a minimum preheat temperature of the substrate, usually steel pipe and the mainline coatings on the pipe sections adjacent to the joint. Even when fewer area is to be heated, or where less torches are employed, certain areas, for example, the mainline coating adjacent the opposite end of the pipe, tends to have cooled below the minimum preheat temperature, so that the sleeve does not bond thereto. Therefore during the shrinking operation, extra prolonged heat has to be applied to sleeve area overlapping onto the mainline coating in order raise the adhesive-mainline coating interface to sufficient temperature to achieve a sound bond. With the flame torches, this is difficult as prolonged heating can scorch and damage the sleeve, and sometimes lead to splitting. The need for the extra prolonged heating is exacerbated by the fact that during the preheating of the joint, the mainline coating surface maybe 40°C - 100°C cooler than the adjacent steel, as described earlier. Therefore, focused prolonged heating is imperative to achieve a good bond on the overlap coating.

Similar considerations should be taken into account when pre-heating a pipe joint prior to film or tape wrapping, or injection moulding.

The present invention provides apparatus that at least in preferred embodiments may avoid the above-noted problems.

### Summary of the Invention

According to one aspect of the invention is provided an apparatus for heating an elongate tubular article, comprising a frame member adapted to be disposed around said article, said frame member having a heater device adapted to heat the elongate tubular article and disposed on or proximal to an inner surface of said frame member, and a controller for operating the heater device.

According to another aspect of the invention is provided an apparatus for heating a heat shrinkable sleeve applied around an elongate tubular article, comprising a frame member adapted to be disposed around said article, said frame member having a heater device adapted to heat the heat shrinkable sleeve and disposed on or proximal to an inner surface of said frame member, and a controller for operating the heater device.

According to a further embodiment, the heater device forms a surface which envelops said elongate tubular article when the apparatus is disposed around said article.

According to yet a further embodiment, the heater device forms a surface which envelops said heat shrinkable sleeve when the apparatus is disposed around said sleeve.

According to a further embodiment, the heater device comprises a thin stamped sheet, foil strip.

According to a further embodiment, the thin stamped sheet or foil strip is configured in a sinusoidal or linear configurations to form a heating plane providing relatively even heat.

According to a further embodiment, the heater device comprises infrared elements in the form of, for example, quartz tubes or ceramic tiles.

According to a further embodiment, the heater device comprises diffused gas combusting devices, powered for example by propane or natural gas, such as catalytic panel heaters.

According to a further embodiment, the heater device comprises at least two independent heating zones adapted to heat respectively at least two distinct longitudinally spaced zones of the elongate tubular article, and said controller allows for the operating of the heating zones simultaneously or sequentially.

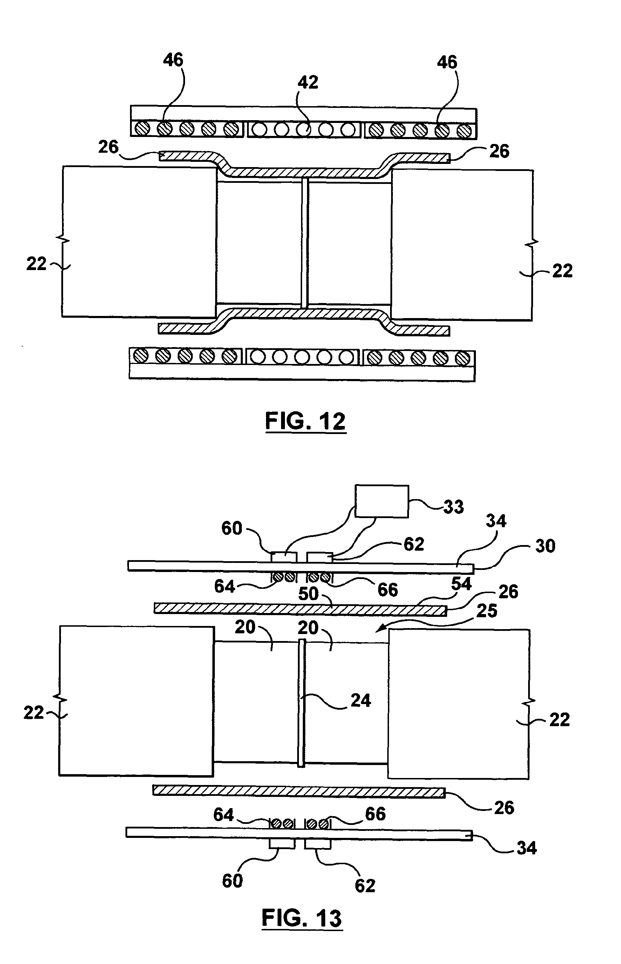

According to a further embodiment, the two independent heating portions are slidable longitudinally with respect to the tubular article from an adjacent, central position to a spaced position, as shown for example in figures 13-15.

According to a further embodiment, the heater device comprises at least two areas of different inner surface diameter when disposed around said article.

According to a further embodiment, the at least two areas comprise a first area and a third area at either end of a second area, wherein the inner surface diameter of said second area is smaller than the inner surface diameter of said first area and said third area.

According to yet a further embodiment, the apparatus has a first, a second, and a third independent heating zones each corresponding to the first, second, and third area.

According to a further embodiment, the apparatus further comprises a reflecting layer and/or an insulating layer.

According to yet a further embodiment, the heater device is mounted onto said reflecting or insulating layer.

According to yet a further embodiment, the reflecting or insulating layer is made of a refractory material.

According to a further embodiment, the frame member comprises a clam shell device having a hinge extending longitudinally along one side.

According to a further aspect of the present invention is provided a method for heating a heat shrinkable sleeve applied around an elongate tubular article, comprising disposing adjacent to the sleeve a heater device as herein described, and heating said sleeve with said heater device.

According to a further embodiment, the heater device comprises at least two heater portions, and said method comprises heating at least two distinct longitudinally spaced zones of the sleeve simultaneously or sequentially with said respective heater portions.

### Description

The invention provides apparatus for heating an elongate tubular article, and/or for heating a heat shrinkable sleeve applied around an elongate tubular article. The apparatus comprises a frame member adapted to be disposed around said article, the frame member provided with a heater device adapted to heat the article and/or the sleeve surrounding said article. The invention also provides a controller for operating the heater device. Optionally, the heater device can comprise two or more independent heater portions adapted to heat respectively two or more distinct longitudinally spaced zones of the sleeve, and the controller is able to operate the heater portions simultaneously or sequentially, and/or at different heating intensities/wavelengths/temperatures. The heater device can comprise two or more regions of different diameters, to better conform to an elongate tubular article of varied diameter.

The heating element is in the form of a thin stamped sheet on foil strip.

Infrared electrical elements are used (also called "foil", or "flexible ribbon" heating elements). Examples of such elements include the V-series medium wavelength infrared panel heaters available from Casso-Solar Corporation, Pomona, New York, United States of America. Other examples can be found throughout the art, for example, as described in EP 0417375, incorporated herein by reference. The thin film elements discussed herein also comprise within their scope strips, sheets, planar thin foil heaters, corrugated ribbon foil, carbon loaded film, metal film photopatterned with runs of graphite material, conductive material sprayed or doctor bladed on a support medium, expanded metal, or wire resistive elements, such as sinuated wire. The V-series, for example, are stamped thin metal sheets having low mass for fast heating/cooling and minimal thermal lag, and can be attached to a high temperature insulation board having low thermal conductivity, low thermal mass and low heat capacity to minimize stored heat. Thin film elements can be mounted on a high temperature insulating material and/or onto refractory insulating material in a variety of configurations, including linear, sinusoidal, or other configurations, as required or desired by the heating configuration and sequence. The use of a thin film or otherwise flexible heating element has numerous advantages. A thin film or otherwise flexible heating element facilitates the manufacturing of the apparatus in varying shape and size, to tightly conform to the area to be heated. The thin film or otherwise flexible heating element also allows customization of apparatus size and shape in other ways, such customization not being limited by the standard sizing and rigidity of quartz tubes or ceramic tiles. The thin film can simply be stamped to the size required. In the case of applying a heat shrinkable sleeve around an elongate tubular article such as a coated pipe, the apparatus can be tapered in the middle, to account for the difference in radius of the uncoated pipe, such as the pipe proximal to the pipe joint, and the radius of the mainline coating; in such cases, a thin film or otherwise flexible heating element can be easily shaped to conform to the varied shape of the apparatus. In this manner, the distance between the pipe joint or heat shrinkable sleeve and the heating element can be made more consistent, allowing for an improved and more even heat distribution along the various areas to be heated. This improved and more consistent proximity may thus permit even closer control of the heating, avoiding problems of burning or splitting of the sleeve. This improved and more consistent proximity is especially advantageous in applications wherein a pipe joint is preheated, and the mainline coating is very thick. Such joints would necessarily have a cavity at the exposed steel area, and a very thick coating adjacently. The use of a heater the foil elements can allow custom design to facilitate the proximity of the heater to the exposed steel, the sloping chamfer of the mainline coating, as well as the top surface of the mainline coating. Thus most efficient heating could be imparted to all surfaces with careful temperature control without burning or oxidising the polymeric coating.

A further advantage of a thin film element is that, compared to the other alternatives described herein, they are more robust and less breakable in field conditions. The film elements are flexible, and when attached to a solid base of insulating material such as refractory insulating material, they are near unbreakable, compared to a quartz tube or a ceramic tile. The thin film elements are also more resistant to contact to water, which may occur in field conditions, for example, on off shore pipe lay-barges. In such conditions, heat shrinkable sleeves are often water cooled, since soft (still hot) sleeves can get damaged by the stinger rollers which support the pipe as it is released into the ocean. Cold water used to cool the pipe can splash onto the heating element as the heating element is removed or placed on the pipe. In the case of quartz tubes or ceramic tiles, this rapid change in temperature can cause cracking or other damage to the heating element, whereas for the thin film elements, there is less risk of such damage, with the cold water simply steaming off the element.

By using stamped thin metal strips, different areas can be heated to different temperatures or at different time periods within the heat shrinking process, simply by having separate heating elements applied to different areas of the apparatus, and having each of these separate heating elements controlled individually by the controller. The different heating elements may be individually thermostatically controlled by the controller, and/or may have different heating characteristics (for example, made of different substrates or having a different coil thickness) to enable the variation in heating. With this arrangement, at least in preferred embodiments, the heating of the sleeve can be carefully controlled to shrink down the middle zone of the sleeve before the end zones, avoiding air entrapment. Moreover, in certain embodiments, once the middle zone of the sleeve is shrunk, the end zones can be shrunk simultaneously, providing for fast installation before the mainline coatings cool down below a required preheat temperature. In case of the preheating of a pipe joint, this arrangement also permits heating the areas of bare pipe to a higher heat level than the areas of coated pipe, thus preventing damage to the pipe coating while providing the bare pipe with optimal heat. Though this controlled heating can be done with the other heating elements described, a further advantage of utilising thin film elements is that the element heats, and cools, much more rapidly. In many cases, the thin film element will cool down with 5-10 seconds of deactivation, and will heat up in a similar time frame. For example, certain metallic foil type elements can have a temperature rise of 700 degrees Celsius, in 10 seconds. Others can cool down in as little as 2 seconds. This means that the controller can control the zone changes much more effectively, rapidly, and precisely. It also means that the pipe joint can be heated, or the sleeve can be shrunk, much more rapidly. This rapid cooling of the thin film elements also adds a safety feature when used in the field, such as on an offshore pipe lay-barge, where work space is crammed - worker safety is dramatically improved, since the heating elements are much cooler when the apparatus is handled, for example, when the apparatus is clamped to, or removed from, a pipe. In addition, the rapid heating and cooling of the film elements can result in significant time and energy cost savings, up to 20%.

The apparatus can also be used before and after application of the heat shrinkable sleeve. For example, the apparatus can be placed around the welded pipe joint, for preheating the welded pipe joint before application of the heat shrinkable sleeve. Once the pipe has been preheated to a desired extent (i.e. after a pre-set temperature or a pre-set time has been reached), the apparatus (including the heating element) can then easily be removed, and the heat shrinkable sleeve can be applied. The apparatus may optionally then be placed around the welded pipe joint again, and heat re-applied, to shrink the heat shrinkable sleeve. This permits a much more consistent and even pre-heating of the pipe joint than previous methods, where, often, different areas of the pipe joint were pre-heated at different times, with resultant unevenness in cooling before the sleeve was applied.

The apparatus can also be used to preheat the pipe joint for other coating applications, for example, before the application of a film or tape wrapping, or an injection moulding of a coating. As would be appreciated, a further advantage of using the apparatus in certain embodiments is that the entire pipe joint or sections of the pipe joint can be brought to a desired temperature, at the same time, and the apparatus can be quickly removed and the application of coating can be started much more quickly than in more traditional preheating methods.

The following aspects are preferred embodiments of the invention.
1. Apparatus for heating an elongate tubular article, as defined in appended claim 1.
2. Apparatus as defined in appended claim 2 to 12.
3. Methods for heating a heat shrinkable sleeve applied around an elongate tubular article, as defined in claims 13 to 14 appended.
4. Method for preheating an elongate tubular article, as defined in claims 15 and 16.

### Brief Description of the Drawings

Preferred embodiments are described with reference to the accompanying drawings, wherein like reference numerals indicate like parts.
Figure 1 shows schematically a longitudinal cross-section through a pipe joint on which is applied a first embodiment of apparatus in accordance with the invention.
Figure 2 shows schematically a transverse cross-section through the pipe joint of Figure 1, said traverse cross-section taken at plane A as shown on Figure 1.
Figure 3 shows schematically a transverse cross-section through the pipejoint of Figure 1, said transverse cross-section taken at plane B as shown on Figure 1.
Figure 4 shows a perspective view illustrating a second embodiment of apparatus in accordance with the invention, shown in an open position with the inside surface exposed.
Figure 5 shows a close-up of area C from Figure 4, illustrating the surface of flexible heating elements that are an element of certain embodiments of the invention.
Figure 6 shows a perspective view illustrating a third embodiment of apparatus in accordance with the invention, shown in an open position with the inside surface exposed.
Figures 7, 8 and 9 show schematically a longitudinal cross-section illustrating the embodiment of Figure 6 in successive stages of operation.
Figures 10, 11 and 12 show schematically a longitudinal cross-section illustrating a further embodiment in accordance with the present invention.
Figures 13, 14 and 15 show schematically a longitudinal cross-section illustrating a further embodiment in accordance with the present invention.

### Detailed Description of the Preferred Embodiments

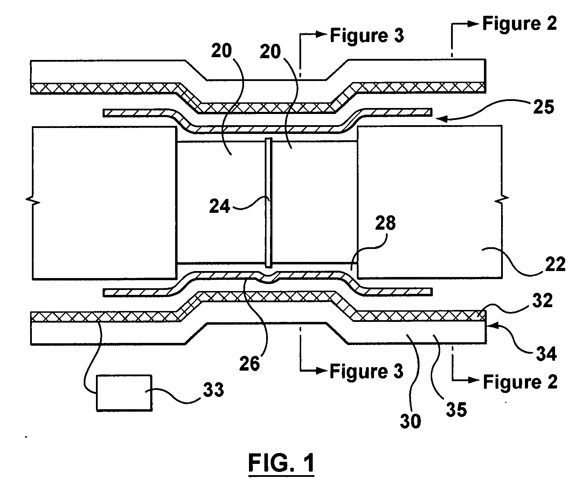

Referring firstly to Figure 1, this shows schematically a frame apparatus 34 providing a generally cylindrical support structure 35. The apparatus 34 is disposed around a cylindrical heat shrink sleeve 26 applied on an elongate tubular article, for example a joint 25 comprising a weld 24 between the bare ends of pipe sections 20, each having a polymeric protective mainline coating 22.

The support structure 35 carries a heater device comprising in this example heating element layer 32. The support structure 35 also has an insulating/reflecting layer 30, which reflects heat emitted from heating element layer 32 and insulates the exterior of the support structure 35. The insulating/reflecting layer 30 may be made of any material known in the art to have heat reflection or insulating properties, for example, an insulating foam or a refractory material.

In a preferred form, as seen in Figure 1, the support structure 35 and heating element layer 32 span the entire length of the sleeve 26 and joint 25, extending beyond the bare ends of pipe sections 20 onto a portion of mainline coating 22.

A controller 33, which may be (as shown) separate from support structure 35 or which may be integrated within it, controls the level and/or intensity of heat output from heating element layer 32. The controller 33 may be thermostatically controlled, may be controlled through the measurement of resistance in heating element layer 32, may be a timer, or may simply be an operator - selected switch.

In the example illustrated in Figure 1, there is one uniform heating element layer 32, which extends around the inner side of substantially the entire support structure 35.

In the example illustrated in Figure 1, the support structure 35 is tapered in the middle, and closely follows the radius of the pipe through its bare pipe sections 20 and mainline coating 22. In this manner, the distance between sleeve 26 and heating element layer 32 can be made more consistent, allowing for an improved and more even heat distribution along the various areas to be heated. This improved and more consistent proximity may thus permit even closer control of the heating of the joint for preheating purpose, and also better control of shrinking operation of shrink sleeves, thus avoiding problems of burning or splitting of the sleeve.

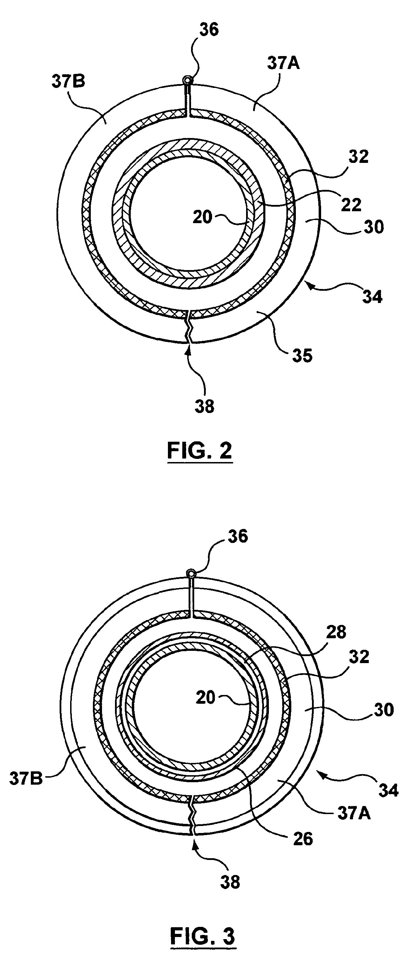

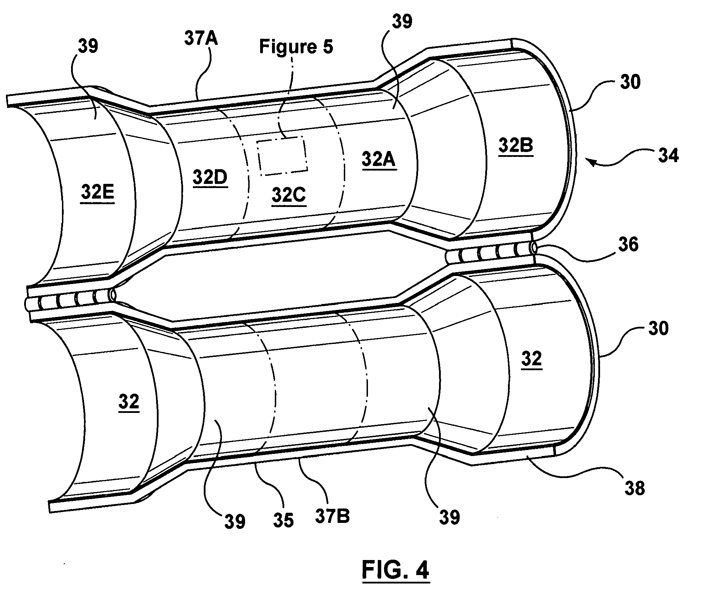

In a preferred form, the support structure 35 comprises a clam shell device as seen in Figures 2 and 3, having a hinge 36 extending longitudinally along one side. In a closed position, as seen in Figures 2 and 3, halves 37a and 37b abut or oppose adjacent one another at edges opposite the hinge 36, along a line of contact or opposition 38. The halves 37a and 37b can be pivoted from the closed position as seen in Figure 2 and 3 to an open position as seen in Figure 4 wherein the edges of halves 37a and 37b are spaced apart sufficiently to allow the open clam shell to be placed over the assembly of the sleeve 26 and pipe joint 25. The halves 37a and 37b are then closed together to commence the pre-heating or shrinking operation.

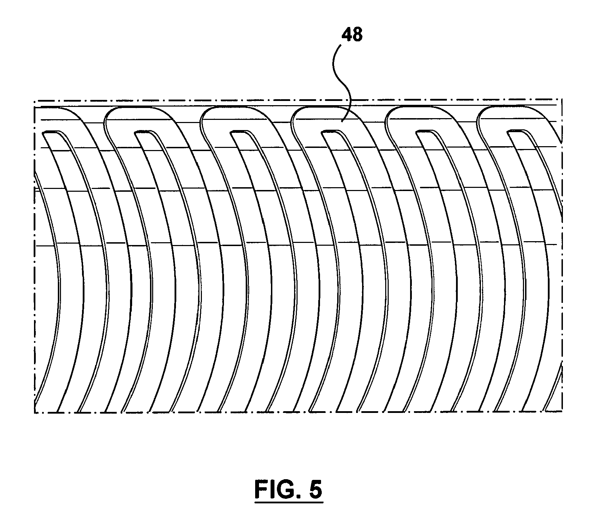

Figure 4 shows the support structure 35 in an open position. The halves 37a and 37b are shown open, with the inner surface 39 of the support structure 35 exposed. Heating element layer 32 spans the entire length and breadth of the inner surface 39, though it may be divided into segments such as segments 32a-e as shown for half 37a. In a preferred embodiment, the heating element layer 32 is a thin film or otherwise flexible heating element, such as a flat foil conductor circuit, or a stamped foil element strip as shown in closeup C in Figure 5, which shows a close-up (not to scale) of the sinusoidal shaped ribbon 48 of a preferred embodiment of the heating element layer 32. The sinusoidal shaped ribbon 48 shown is approximately 3 mm wide and 1 mm thick, and curved or sinusoidal in shape to maximize surface area. The flexible, thin nature of the ribbon 48 allows for the heating element layer 32 to be three-dimensionally profiled such that it curves around support structure 35, maximizing the area and evenness of heating when it is applied to joint 25. The heating element layer 32 provides radiant infra-red energy at a wavelength of between 2 ½ to 6 µm. The heating element layer 32 typically provides energy as both radiant infra-red radiation and "heat"; we have found that, for a polyolefin heat shrink sleeve, a wavelength of about 3.45 µm provides excellent results.

In one embodiment, the heating element layer 32 consists of thin circuit nickel chromium alloy. Other embodiments comprise a heating element layer 32 made from chromium aluminum and iron alloy or nickel chromium and iron alloy. In one embodiment, the heating element layer 32 is a thin stamped sheet or foil having a chemical composition in percent by weight as follows: 0.02 - 0.10% C; 0-0.10% Mn; 19.5% Cr; about 56% Ni; 4.25% Mo; 0-2.0% Fe; 13.5% Co; 1.3% Al; 9.1% Cu; 0-0.15% Si; 0.003-0.01% B; and 3% Ti.

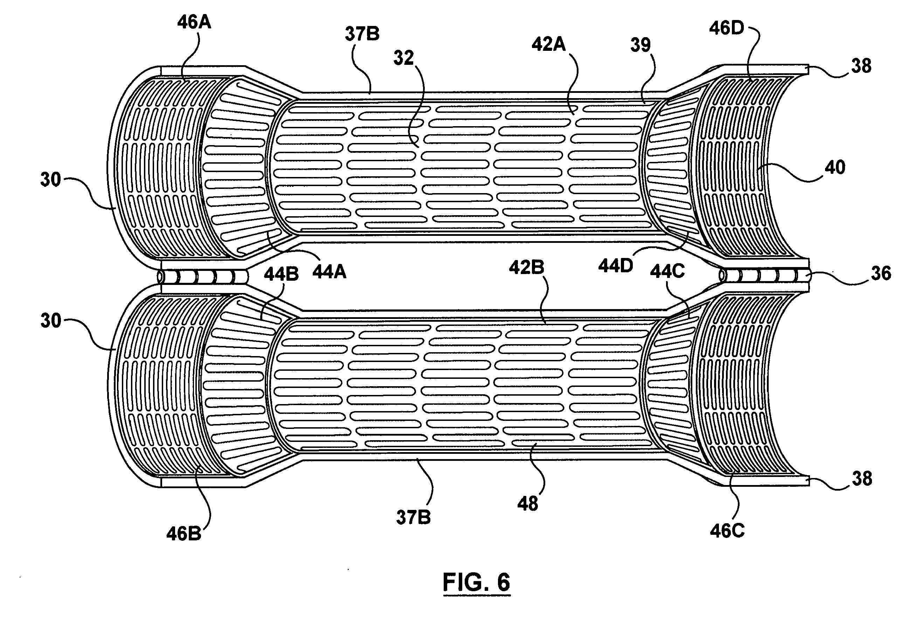

Figure 6 is an illustration of support structure 35 in an open position. The halves 37a and 37b are shown open, with the interior of the support structure 35 (i.e. the area most proximal to pipe 20 when in use) exposed. Heating element layer 32 spans the entire length and breadth of the inner surface 39. Figure 6 illustrates ribbon 48, though it would be understood to a person skilled in the art that the actual dimensions of ribbon 48 are typically much more densely packed, for example, a width of about 3 mm. In the embodiment shown in Figure 6, heating element layer 32 is divided into ten different zones, each having a separate flexible heat film. Half 37a is divided into a center zone 42a, surrounded by transition zones 44a and 44d, each of which is, in turn, flanked by external zones 46a and 46d, respectively. Likewise, half 37b is divided into center zone 42b, surrounded by transition zones 44b and 44c, each of which is, in turn, flanked by external zones 46b and 46c, respectively. Each of the zones 42a, 42b, 44a, 44b, 44c, 44d, 46a, 46b, 46c, and 46d comprises a separate stamped foil element strips, which can be controlled separately by controller 33 (not shown in Figure 6). Each of these zones may have specified number of these strips, more densely packed strips would emit more infra red waves and more heat output. Thus, the apparatus features ten separate heating areas, which can be independently set for different heat intensities and temperatures, or different times of heating. For example, when clamped around pipe joint 25, a heating sequence can be selected such that zones 42a and 42b heat first, thus heating the heat shrinkable sleeve 26 surrounding the exposed pipe 20. Second in the sequence, zones 44a, 44b, 44c, and 44d are activated, heating the transition areas. Optionally, center zones 42a and 42b may be switched off at this point in time. Third in the sequence, zones 46a-d would be activated, again, optionally switching off transition zones 44a-d, and, if still applicable, center zones 42a and 42b. In this manner, heat is applied starting in the middle of the heat shrink sleeve 26, then radiating outwards, which minimizes bubble formation and/or air pocket 28. Similar heat sequence would also follow for preheating of the joint whereby the zones 42a and 42b over the steel are set at higher intensity, and the zones 44a, 44b, 46a and 46b over the polymeric coating are set lower intensities, but for longer time to avoid oxidative damage to the coating.

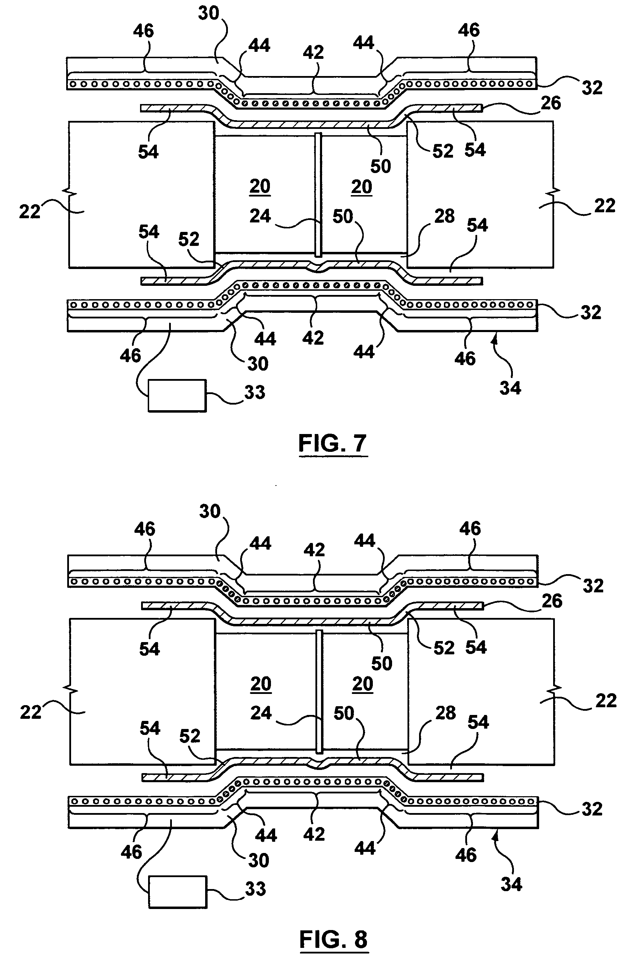

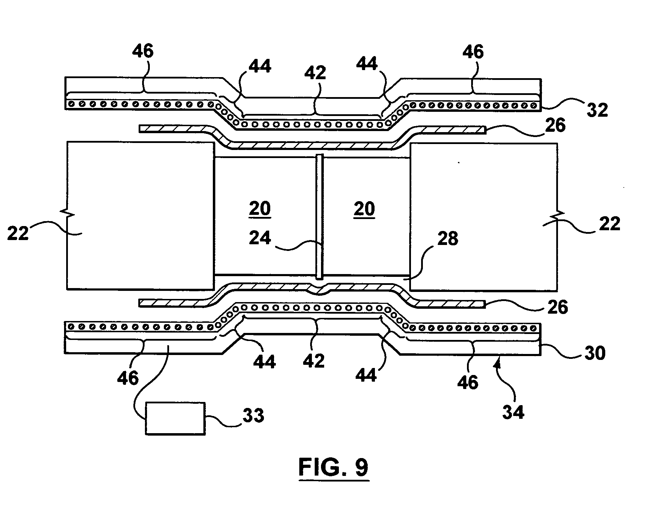

Figures 7-9 show the sequence as described above, in schematic form. In operation, the controller 33 is first actuated to operate solely the center zone 42 (comprising center zones 42a and 42b), at a desired heat output and for a period sufficient to cause a middle portion 50 of sleeve 26 to shrink onto the weld 24 and bare pipe ends 20, as seen in Figure 7, which shows center zone 42 in black, denoting activation. The controller 33 is then actuated to operate transition zone 44 (comprising transition zones 44a, 44b, 44c, and 44d) at a desired heat output and for a period sufficient to cause a transition portion 52 of sleeve 26 to shrink onto the pipe 20 and the mainline coating 22. During this period of heating, depending on the application, center zone 42 may also be heated; alternatively and as shown in Figure 8, only the transition zone 44 is heated. Finally, the controller 33 is actuated to operate external zone 46 (comprising external zones 46a, 46b) at a desired heat output and for a period sufficient to cause an outer portion 54 of sleeve 26 to shrink onto the mainline coating 22. During this period of heating, depending on the application, heating zone 42 and/or heating zone 44 may also be heated; as shown in Figure 9, only the outer zone 46 is heated. Optionally, heating zones 42, 44 and 46 can be heated to different temperatures, and/or for different durations of time, depending on the preferred temperature and duration of heat required for the particular material comprising the pipe 20, pipe joint 25, or mainline coating 22. By providing heat starting at the center and moving in an outward direction, air pockets (for example, air pocket 28) between the pipe 20 and/or the mainline coating 22, and the heat shrink sleeve 26, are minimized, since air is expelled progressively from the annulus between the sleeve 26 and the pipe ends in the above stages.

Following completion of the shrinking, the halves 37a and 37b of the clam shell device are pivoted to the open position to facilitate moving the apparatus relative to the pipe, to align it with a further pipe joint, and the above described cycle of operation is repeated.

As will be appreciated, the apparatus may have any number of heat zones for any desired application. In addition, the controller 33 may be actuated manually or under the control of an automatic primary controller, optionally with pre-set temperature and timing for a selection of a variety of pipes, mainline coatings 22, and/or applications. For example, in some applications, the apparatus would be used for preheating a pipe 20, pipe joint 25, and mainline coating 22 following the welding of the pipe joint 25 and before the application of a film or tape wrapping or an injection moulding coating. In such applications, of course, sleeve 26 would be absent. In such applications, the controller may be pre-set for different temperatures for the different areas of the heating element. For example, the entire heating element may be set for a simultaneous 5 minute heating, but the center zone 42 would be set to heat at a much higher intensity and temperature than transition zone 44, which, in turn, would be set to heat at a higher intensity than external zone 46. In this manner, the pipe 20 and pipe joint 25 can be preheated to a desired temperature, while avoiding damage to mainline coating 22, which would be heated with a lower intensity to the desired temperature. Alternatively, for example in cases where mainline coating 22 is especially thick (for example, 100 mm thick), it may be desired to heat external zone 25 for an extended period of time (for example, 10 minutes) at a relatively low intensity, to allow the heat to permeate the mainline coating 22. In cases like this, the controller can be set to heat external zone 25 for 10 minutes, with transition zone 44 and center zone 42 activating for the last 5 minutes of such time period. In this example, transition zone 44 would be useful as an interface zone, heating only for 5 minutes, but heating at an intensity similar to external zone 25, to avoid damage at the interface between the mainline coating 22 and the pipe 20. Center zone 42 would heat at a much higher intensity, since pipe 20 can typically withstand (and may require) a higher intensity heat due to much faster heat dissipation properties as compared to mainline coating 22. Using this heating method, at the end of the 10 minutes, all heated sections of pipe 20 and mainline coating 22 are at the desired preheat temperature, suitable for film or tape wrapping, injection moulding, or application of a heat shrinkable sleeve.

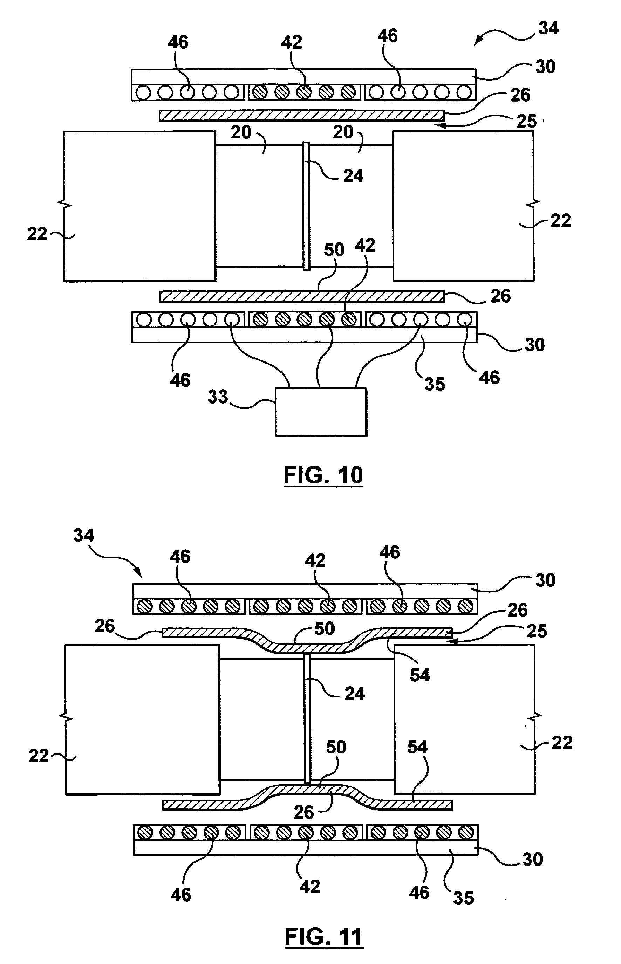

Figures 10-12 show a further embodiment of the apparatus of the present invention. This embodiment differs from the embodiment shown in Figures 7-9 in that (a) the heating element layer only comprises two heat zones; and (b) the support structure 35 and, as a result, the heating element layer 32 are not three-dimensionally profiled in that the radius of the support structure 35 and the heating element layer 32 is essentially uniform through the longitude of the apparatus. Heating element layer 32 is divided into different zones, comprising center zone 42, surrounded by external zones 46. The apparatus thus has two separate heating areas, which can be independently set for different heat intensities and temperatures, or different times of heating. For example, when clamped around pipe joint 25, a heating sequence can be selected such that zone 42 heats first, thus heating the heat shrinkable sleeve 26 surrounding the exposed pipe 20. Second in the sequence, external zone 46 is activated. Thus, heat is applied starting in the middle of the heat shrink sleeve 26, then radiating outwards, which minimizes bubble formation and/or air pocket 28. Third in the sequence, zone 42 is deactivated; finally, zone 46 is deactivated. Steps 1-3 of the sequence are shown in schematic form in figures 10 - 12, respectively. In operation, as shown in Figure 10, Controller 33 is first actuated to operate solely the center zone 42 at a desired heat output and for a period sufficient to cause a middle portion 50 of sleeve 26 to shrink onto the weld 24 and bare pipe ends 20, (as seen, after heating, in figure 11). In figure 10, the center zone 42 is illustrated in black, denoting activation. In the second step of the sequence, depicted in figure 11, the controller 33 is then actuated to operate external zone 46 at a desired heat output and for a period sufficient to cause the outer portion 54 of sleeve 26 to shrink onto the mainline coating 22. During this period of heating, heating zone 42 is also active. Activated heating zones are depicted in black. The third step of the sequence is shown in figure 12; controller 33 is actuated to deactivate the center zone 42 so that only the external zones 46 are activated (depicted in black in Figure 12). The external zone 46 is heated at a desired heat output and for a period sufficient to cause the outer portion 54 of sleeve 26 to shrink onto the mainline coating 22. Finally (not shown), the controller 33 deactivates all heating zones so that the apparatus 34 can be safely removed from the pipe sections 20 by an operator. The clam shell device is pivoted to the open position to facilitate moving the apparatus relative to the pipe, to align it with a further pipe joint, and the above described cycle of operation is repeated.

Of course, the apparatus as illustrated in Figures 10-12 can be used to preheat a pipe before injection moulding, film or tape wrapping, or application of sleeve 26, in which case, the parameters and heating order may be slightly different (and analogous to as discussed above for figures 7-9) but controlled in the same manner. In these applications, sleeve 26 would be absent.

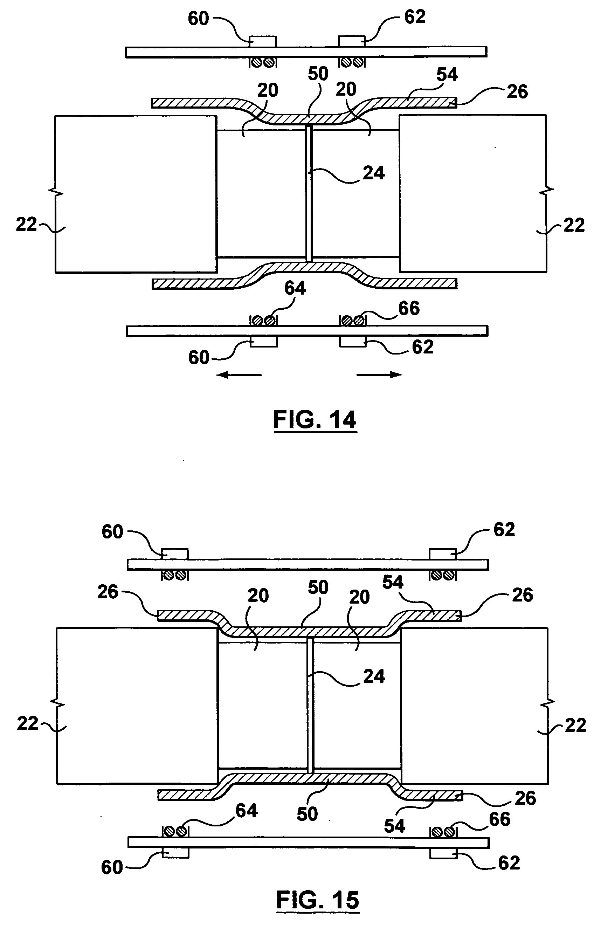

Figures 13-15 show a further embodiment of the present invention. Figures 13-15 comprise apparatus including generally cylindrical support structure 35 carrying support devices 60 and 62 slidable longitudinally with respect to the structure 35 from an adjacent, central position seen in figure 13 to a spaced position seen in figure 15 in which the devices 60 and 62 are adjacent to the ends of the sleeve 26 subject to the action of drives (not shown). Each device 60 and 62 carries with it a generally circumferentially extending heating portion 64 and 66, respectively, operable under the control of the controller 33. The controller 33 may also control the drives that effect sliding movement of the devices 60 and 62. As described below, portions 64 and 66 each initially heat in common a middle zone of sleeve 26 and subsequently heat progressively respective end zones of the sleeve.

In use, the heating portions 64 and 66 can be in this example operated simultaneously and are moved progressively outwardly from the position shown in figure 13, wherein the middle zone 50 of the sleeve 26 is shrunk down and bonded on the weld 24 and on the bare ends of the pipe sections 20, to the position of figure 14, wherein portions of the sleeve 26 outwardly from the middle zone 50 are shrunk down and bonded on the bare ends of the sections 20. The shrinkage of the middle and of zones somewhat outwardly of the middle of the sleeve 26 expels air from the sleeve 26 in the above stages.

In the final stage, as seen in figure 15, the heating portions 64 and 66 heat the end zones 54 of the sleeve 26 and bond them to the mainline coating 22.

In one modification (not shown) a structure 35 similar to that shown in Figures 13-15 carries three heating portions. In operation, a central heating portion remains stationary to shrink down and bond the middle zone of the sleeve, while the two outer heating portions, which may be operated after operation of the central portion, slidably travel outwards, generally as described with reference to figures 13 to 15, above.

The structure shown in Figures 13-15, and the modified structure described in the preceding paragraph, can also be advantageously used to preheat a pipe portion before application of a sleeve 26, or for film or tape wrapping or injection moulding. For example, the heating portions 64 and 66 can be moved progressively outward at increasing speed, so that mainline coating 22 is subjected to heat for a shorter period of time than pipe 20. Alternatively, heating portions 64 and 66 can be moved progressively outward at decreasing speed, with a simultaneous decrease in heating intensity, such that mainline coating 22 is subjected to heat for a longer period of time, but a less intense heat, than pipe 20. In certain embodiments, the heating portions 64 and 66 can start at the most external position, moving together towards pipe weld 24. In this manner, the mainline coating 22 is subjected to heat first, since, in some applications, it will retain heat longer than pipe 20.

Advantages of preferred embodiments of the present apparatus, in addition to those mentioned above, include the following:
The apparatus offers high speed automatic operation wherein the heating of successive zones of the sleeve eliminates air entrapment.

The support structure such as insulating/reflecting layer 30 shields the interior of the apparatus so that its operation is not impaired by windy conditions.

The flexible thin film heating element allows for a shape whereby pipes having thick mainline coatings 22 can be accommodated through the use of a narrower inner portion which 'hugs' the exposed pipe 20 proximal to the weld 24.

Since the apparatus covers the entire sleeve, once the middle zone of the sleeve is shrunk, the end zones may then be shrunk simultaneously, providing fast installation of the sleeve before the mainline coating 22 cools down below the desired preheat temperature.

Although all of the figures show the apparatus for use with sleeve 26, it would be appreciated that the apparatus could also equally be used for pre-heating of the pipe joint, either before application of the sleeve 26, or for different applications, such as pre-heating of a pipe joint before tape or film wrapping, or before injection moulding of a coating around the pipe joint. In such applications, sleeve 26 would, of course, be absent.

It is to be understood that the present invention is not limited to the embodiments described above, but encompasses any and all embodiments within the scope of the following claims.

## Claims

1. Apparatus (34) for heating an item selected from: an elongate tubular article (20); and a heat shrinkable sleeve (26) applied around an elongate tubular article (20); comprising a frame member (35) adapted to be disposed around said item, said frame member (35) having a heater device (32) adapted to heat the item and disposed on or proximal to an inner surface of said frame member (35), and a controller (33) for operating the heater device (32); the said heater device (32) having two or more heating zones, and comprises an infrared heating element,
**characterized in that**
the infra red heating element is in the form of a thin stamped sheet or foil strip (48), said heating element providing radiant infra-red energy at a wavelength of between 2.5 and 6 µm.

2. Apparatus (34) of claim 1, wherein said heating element provides radiant infra-red energy at a wavelength of about 3.45 µm.

3. Apparatus (34) of claim 1, wherein the heater device (32) forms a surface which envelops said item when the apparatus is disposed around said article.

4. Apparatus (34) of any one of the preceding claims, wherein the stamped sheet or foil strip (48) comprises a material selected from the group consisting of: a nickel chromium alloy; a chromium aluminum alloy; a nickel chromium iron alloy; iron chromium aluminium alloy; and inconel.

5. Apparatus (34) of any one of the preceding claims, wherein the heater device (32) comprises at least two independent heating zones (42), (44) adapted to heat respectively at least two distinct longitudinally spaced zones of the item, and said controller (33) allows for the operating of the heating zones (42, 44) simultaneously or sequentially, wherein the at least two independent heating zones (42, 44) are preferably slidable longitudinally with respect to the structure from an adjacent, central position to a spaced position.

6. Apparatus (34) of any one of the preceding claims, wherein the heater device comprises at least two areas of different inner surface diameter when disposed around said item.

7. Apparatus (34) of claim 6 wherein the at least two areas comprise a first area and a third area at either end of a second area, wherein the inner surface diameter of said second area is smaller than the inner surface diameter of said first area and said third area, wherein the apparatus preferably has a first, a second, and a third independent heating zones each corresponding to the first, second, and third area.

8. Apparatus (34) of any one of the preceding claims, further comprising a refractory or insulating layer (30), wherein the heater device (32) is preferably mounted or bonded onto said refractory or insulating layer (30).

9. Apparatus (34) of any one of the preceding claims, wherein the frame member (35) comprises a clam shell device having a hinge (36) extending longitudinally along one side.

10. Apparatus (34) of any of the preceding claims, wherein the heater device (32) is capable of heating from an ambient temperature to a temperature of 700 degrees Celsius in 10 seconds.

11. Apparatus (34) of any of claims 1-9, wherein the heater device (32) is capable of cooling down from a heating temperature to ambient temperature in 2 seconds.

12. Apparatus (34) of any of claims 1-9, wherein the thin stamped sheet or foil strip (48) has a chemical composition in percent by weight as follows: 0.02-0.10% C; 0-0.10% Mn; 19.5% Cr; about 56% Ni; 4.25% Mo; 0-2.0% Fe; 13.5% Co; 1.3% Al; 9.1% Cu; 0-0.15% Si; 0.003-0.01% B; and 3% Ti.

13. Method for heating a heat shrinkable sleeve (26) applied around an elongate tubular article (20), comprising disposing adjacent to the sleeve (26) a heater device (32) of any one of claims 1-12, and heating said sleeve (26) with said heater device (32).

14. Method of claim 13 wherein the heater device (32) comprises at least two heater portions (32a, 32b), and said method comprises heating at least two distinct longitudinally spaced zones (50, 54) of the sleeve (26) simultaneously or sequentially with said respective heater portions.

15. Method for preheating an elongate tubular article (20), comprising disposing adjacent to said elongate tubular article (20), a heater device (32) of any one of claims 1-12, and heating said elongate tubular article (20) with said heater device (32).

16. Method of claim 15 wherein the heater device (32) comprises at least two heater portions (32a, 32b), and said method comprises heating at least two distinct longitudinally spaced zones of the elongate tubular article simultaneously or sequentially with said respective heater portions.

## Patentansprüche

1. Vorrichtung (34) zum Erwärmen eines Gegenstands, der ausgewählt ist aus einem länglichen röhrenförmigen Artikel (20) und einem Wärmeschrumpfschlauch (26), der um einen länglichen röhrenförmigen Artikel (20) aufgebracht ist; die aufweist:
ein Rahmenelement (35), das eingerichtet ist, um den Gegenstand angeordnet zu werden, wobei das Rahmenelement (35) eine Heizvorrichtung (32) aufweist, die eingerichtet ist, den Gegenstand zu erwärmen, und auf oder proximal zu einer Innenseite des Rahmenelements (35) angeordnet ist, und
eine Steuereinrichtung (33) zum Betreiben der Heizvorrichtung (32); wobei die Heizvorrichtung (32) zwei oder mehrere Heizzonen hat und ein Infrarot-Heizelement aufweist,
**dadurch gekennzeichnet, dass**
das Infrarot-Heizelement in der Form eines dünnen geprägten Blechs oder Folienstreifens (48) vorliegt, wobei das Heizelement Strahlungsinfrarotenergie mit einer Wellenlänge zwischen 2,5 und 6 µm bereitstellt.

2. Vorrichtung (34) nach Anspruch 1, wobei das Heizelement Strahlungsinfrarotenergie mit einer Wellenlänge von etwa 3,45 µm bereitstellt.

3. Vorrichtung (34) nach Anspruch 1, wobei die Heizvorrichtung (32) eine Oberfläche bildet, die den Gegenstand einhüllt, wenn die Vorrichtung um den Artikel angeordnet ist.

4. Vorrichtung (34) nach einem der vorhergehenden Ansprüche, wobei das geprägte Blech oder der Folienstreifen (48) ein Material aufweist, das aus der Gruppe ausgewählt ist, die besteht aus: einer Nickel-Chrom-Legierung; eine Chrom-Aluminium-Legierung; einer Nickel-Chrom-Eisen-Legierung; einer Eisen-Chrom-Aluminium-Legierung und Inconel.

5. Vorrichtung (34) nach einem der vorhergehenden Ansprüche, wobei die Heizvorrichtung (32) mindestens zwei unabhängige Heizzonen (42, 44) aufweist, die eingerichtet sind, jeweils mindestens zwei unterschiedliche longitudinal beabstandete Zonen des Gegenstands zu erwärmen, und die Steuereinrichtung (33) das gleichzeitige oder sequentielle Betreiben der Heizzonen (42, 44) ermöglicht, wobei die mindestens zwei unabhängigen Heizzonen (42, 44) vorzugsweise bezüglich der Struktur von einer benachbarten, zentralen Position zu einer beabstandeten Position longitudinal verschiebbar sind.

6. Vorrichtung (34) nach einem der vorhergehenden Ansprüche, wobei die Heizvorrichtung mindestens zwei Bereiche mit unterschiedlichem Innenseitendurchmesser aufweist, wenn sie um den Gegenstand angeordnet ist.

7. Vorrichtung (34) nach Anspruch 6, wobei die mindestens zwei Bereiche einen ersten Bereich und einen dritten Bereich an jedem Ende eines zweiten Bereichs aufweisen, wobei der Innenseitendurchmesser des zweiten Bereichs kleiner als der Innenseitendurchmesser des ersten Bereichs und des dritten Bereichs ist, wobei die Vorrichtung vorzugsweise eine erste, eine zweite und eine dritte unabhängige Heizzone aufweist, die jeweils dem ersten, zweiten, und dritten Bereich entsprechen.

8. Vorrichtung (34) nach einem der vorhergehenden Ansprüche, die ferner eine feuerfeste oder isolierende Schicht (30) aufweist, wobei die Heizvorrichtung (32) vorzugsweise an der feuerfesten oder isolierenden Schicht (30) angebracht oder mit ihr verbunden ist.

9. Vorrichtung (34) nach einem der vorhergehenden Ansprüche, wobei das Rahmenelement (35) eine Muschelschalenvorrichtung mit einem Gelenk (36) aufweist, das sich längs einer Seite longitudinal erstreckt.

10. Vorrichtung (34) nach einem der vorhergehenden Ansprüche, wobei die Heizvorrichtung (32) zum Erwärmen von einer Umgebungstemperatur auf eine Temperatur von 700 Grad Celsius in 10 Sekunden in der Lage ist.

11. Vorrichtung (34) nach einem der Ansprüche 1 bis 9, wobei die Heizvorrichtung (32) zum Abkühlen von einer Erwärmungstemperatur auf Umgebungstemperatur in 2 Sekunden in der Lage ist.

12. Vorrichtung (34) nach einem der Ansprüche 1 bis 9, wobei das dünne geprägte Blech oder der Folienstreifen (48) eine chemische Zusammensetzung in Gewichtsprozent wie folgt aufweist: 0,02-0,10% C; 0-0,10% Mn; 19,5% Cr; etwa 56% Ni; 4,25% Mo; 0-2,0% Fe; 13,5% Co; 1,3% Al; 9,1% Cu; 0-0,15% Si; 0,003-0,01% B und 3% Ti.

13. Verfahren zum Erwärmen eines Wärmeschrumpfschlauchs (26), der um einen länglichen röhrenförmigen Artikel (20) aufgebracht ist, das das Anordnen einer Heizvorrichtung (32) nach einem der Ansprüche 1 bis 12 benachbart zum Schlauch (26) und das Erwärmen des Schlauchs (26) mit der Heizvorrichtung (32) aufweist.

14. Verfahren nach Anspruch 13, wobei die Heizvorrichtung (32) mindestens zwei Heizabschnitte (32a, 32b) aufweist und das Verfahren das gleichzeitige oder sequentielle Erwärmen von mindestens zwei unterschiedlichen longitudinal beabstandeten Zonen (50, 54) des Schlauchs (26) mit den jeweiligen Heizabschnitten aufweist.

15. Verfahren zum Vorwärmen eines länglichen röhrenförmigen Artikels (20), das das Anordnen einer Heizvorrichtung (32) nach einem der Ansprüche 1 bis 12 benachbart zum länglichen röhrenförmigen Artikel (20) und das Erwärmen des länglichen röhrenförmigen Artikels (20) mit der Heizvorrichtung (32) aufweist.

16. Verfahren nach Anspruch 15, wobei die Heizvorrichtung (32) mindestens zwei Heizabschnitte (32a, 32b) aufweist und das Verfahren das gleichzeitige oder sequentielle Erwärmen von mindestens zwei unterschiedlichen longitudinal beabstandeten Zonen des länglichen röhrenförmigen Artikels mit den jeweiligen Heizabschnitten aufweist.

## Revendications

1. Système (34) pour le chauffage d'un article sélectionné entre : un objet tubulaire allongé (20) ; et une gaine thermorétractable (26) appliquée autour d'un objet tubulaire allongé (20) ; comprenant un élément de cadre (35) prévu pour être disposé autour de l'article, ledit élément de cadre (35) comprenant un dispositif de chauffage (32) prévu pour chauffer l'article et disposé sur une surface intérieure de l'élément de cadre (35), ou à proximité de celle-ci, et un dispositif de commande (33) destiné à activer le dispositif de chauffage (32) ; ledit dispositif de chauffage (32) présentant au moins deux zones de chauffage, et comportant un élément de chauffage infrarouge,
**caractérisé en ce que**
l'élément de chauffage infrarouge a la forme d'une tôle mince emboutie ou d'une bande (48), ledit élément de chauffage diffusant une énergie de rayonnement infrarouge à une longueur d'onde comprise entre 2,5 et 6 µm.

2. Système (34) selon la revendication 1, où l'élément de chauffage diffuse une énergie de rayonnement infrarouge à une longueur d'onde de 3,45 µm environ.

3. Système (34) selon la revendication 1, où le dispositif de chauffage (32) forme une surface qui enveloppe l'article quand le système est disposé autour de l'objet.

4. Système (34) selon l'une des revendications précédentes, où la tôle emboutie ou la bande (48) contient un matériau sélectionné dans le groupe comprenant : un alliage nickel-chrome ; un alliage chrome aluminium ; un alliage nickel-chrome-fer ; un alliage fer-chrome-aluminium ; et de l'Inconel.

5. Système (34) selon l'une des revendications précédentes, où le dispositif de chauffage (32) présente au moins deux zones de chauffage indépendantes (42), (44) prévues pour chauffer respectivement au moins deux zones distinctes de l'article espacées longitudinalement, et où le dispositif de commande (33) permet l'activation simultanée ou séquentielle des zones de chauffage (42, 44), lesdites au moins deux zones de chauffage indépendantes (42, 44) étant préférentiellement translatables longitudinalement par rapport à la structure d'une position de contiguïté centrale à une position d'espacement.

6. Système (34) selon l'une des revendications précédentes, où le dispositif de chauffage comprend au moins deux régions de diamètres de surface intérieure différents quand il est disposé autour de l'article.

7. Système (34) selon la revendication 6, où lesdites au moins deux régions comprennent une première région et une troisième région à l'une des extrémités d'une deuxième région, le diamètre de surface intérieure de la deuxième région étant inférieur au diamètre de surface intérieure de la première région et de la troisième région, le système présentant préférentiellement une première, une deuxième et une troisième zones de chauffage indépendantes correspondant respectivement à la première, à la deuxième et à la troisième région.

8. Système (34) selon l'une des revendications précédentes, comprenant en outre une couche réfractaire ou isolante (30), le dispositif de chauffage (32) étant préférentiellement monté sur ladite couche réfractaire ou isolante (30) ou lié à celle-ci.

9. Système (34) selon l'une des revendications précédentes, où l'élément de cadre (35) est pourvu d'un dispositif à coque double à charnière (36) s'étendant longitudinalement sur un côté.

10. Système (34) selon l'une des revendications précédentes, où le dispositif de chauffage (32) est apte à chauffer d'une température ambiante jusqu'à une température de 700° C en 10 secondes.

11. Système (34) selon l'une des revendications 1 à 9, où le dispositif de chauffage (32) est apte à refroidir d'une température de chauffage jusqu'à une température ambiante en 2 secondes.

12. Système (34) selon l'une des revendications 1 à 9, où la tôle mince emboutie ou la bande (48) a la composition chimique suivante en pourcentage en poids : 0,02 à 0,10 % C ; 0 à 0,10 % Mn ; 19,5 % Cr ; environ 56 % Ni ; 4,25 % Mo ; 0 à 2,0 % Fe ; 13,5 % Co; 1,3 % Al; 9,1 % Cu; 0 à 0,15 % Si ; 0,003 à 0,01 % B ; et 3 % Ti.

13. Procédé de chauffage d'une gaine thermorétractable (26) appliquée autour d'un objet tubulaire allongé (20), comprenant la disposition contiguë à la gaine (26) d'un dispositif de chauffage (32) selon l'une des revendications 1 à 12, et le chauffage de la gaine (26) par le dispositif de chauffage (32).

14. Procédé selon la revendication 13, où le dispositif de chauffage (32) comporte au moins deux sections de chauffage (32a, 32b), et où le procédé comprend le chauffage d'au moins deux zones distinctes de la gaine (26) espacées longitudinalement (50, 54), simultanément ou séquentiellement par les sections de chauffage respectives.

15. Procédé de pré-chauffage d'un objet tubulaire allongé (20), comprenant la disposition contiguë audit objet tubulaire allongé (20) d'un dispositif de chauffage (32) selon l'une des revendications 1 à 12, et le chauffage de l'objet tubulaire allongé (20) par le dispositif de chauffage (32).

16. Procédé selon la revendication 15, où le dispositif de chauffage (32) comporte au moins deux sections de chauffage (32a, 32b), et où ledit procédé comprend le chauffage d'au moins deux zones distinctes de l'objet tubulaire allongé espacées longitudinalement, simultanément ou séquentiellement par les sections de chauffage respectives.
